# EUROPÄISCHE PATENTSCHRIFT

(11) **EP 3 301 304 B1**
(45) Veröffentlichungstag und Bekanntmachung des Hinweises auf die Patenterteilung: **17.08.2022**
(21) Anmeldenummer: 17188455.4
(22) Anmeldetag: 30.08.2017
(51) Int. Cl.: F04D 17/16, F04D 27/00, F04D 29/42, G01F 5/00, G01F 1/692

(54) **ANSAUGDÜSE UND AUSBLASEINHEIT EINES VENTILATORS**
SUCTION NOZZLE AND VENTING UNIT OF A FAN
BUSE D'ASPIRATION ET UNITÉ DE SOUFFLAGE D'UN VENTILATEUR

(30) Priorität: 28.09.2016 DE 102016118369
(43) Veröffentlichungstag der Anmeldung: 04.04.2018
(60) Teilanmeldung: 18163059.1
(73) Patentinhaber: ebm-papst Mulfingen GmbH & Co. KG, 74673 Mulfingen (DE)
(72) Erfinder: HELI, Thomas, 74595 Langenburg (DE); Riegler, Peter, 97944 Boxberg (DE); Schaaf, Valerius, 74635 Kupferzell (DE)
(74) Vertreter: Staeger & Sperling Partnerschaftsgesellschaft mbB

(56) Entgegenhaltungen:
- EP-A1- 0 626 519
- EP-A1- 0 819 855
- EP-A1- 0 887 555
- DE-A1- 10 114 405
- DE-B3-102015 109 684
- DE-U1- 8 911 433

## Beschreibung

Die Erfindung betrifft eine Ansaugdüse eines Ventilators mit integrierter Volumenstrommessung sowie den Ventilator.

In vielen Anwendungen der Luft- und Klimatechnik ist es notwendig, den geförderten Volumenstrom eines Gebläses bzw. Ventilators zu bestimmen bzw. konstant zu regeln. Darüber hinaus sind in derartigen Anwendungen die Anforderungen an ein möglichst geringes Ventilatorgeräusch hoch.

Herkömmlicherweise wurden in der Luft- und Klimatechnik Trommelläufer-Ventilatoren eingesetzt, da sich diese auch unter gestörten Zuströmbedingungen durch ein gutes Geräuschverhalten auszeichnen. Die Volumenstrombestimmung ist bei Trommelläufer-Ventilatoren durch einen eindeutigen Zusammenhang zwischen Leistungsaufnahme und Volumenstrom bei konstanter Drehzahl möglich. Nachteilig ist jedoch der im Vergleich zu Radialventilatoren, insbesondere mit Gebläserädern mit rückwärts gekrümmten Schaufeln, relativ niedrige Wirkungsgrad.

Aufgrund gestiegener Effizienzanforderungen werden die Trommelläufer-Ventilatoren mehr und mehr von Radialventilatoren, die ggf. rückwärts gekrümmte Schaufeln aufweisen, verdrängt. Bei diesen besteht jedoch kein eindeutiger Zusammenhang zwischen Leistungsaufnahme und Volumenstrom bei konstanter Drehzahl. Deshalb ist zur Bestimmung des geförderten Volumenstroms ein anderes Verfahren notwendig. Eine bekannte Lösung ist die Entnahme des statischen Drucks in der Einlaufdüse des Ventilators mit Hilfe einer Ringleitung. Mit diesem Verfahren lässt sich aus dem gemessenen statischen Druck direkt der Volumenstrom ermitteln. Typischerweise werden drei oder vier Druckentnahmestutzen über eine Ringleitung verbunden und mittels einer Schlauchleitung ein Drucksensor angeschlossen. Eine solche (Schlauch-) Ringleitung verursacht jedoch einen hohen Montageaufwand und mithin hohe Kosten. Ein solches Verfahren ist beispielsweise aus der EP 0 887 555 A1 bekannt.

Außerdem ist bei der Berechnung nachteilig, dass zwischen dem geförderten Volumenstrom und dem Wirkdruck ein nichtlinearer Zusammenhang besteht, wodurch sich die Messgenauigkeit basierend auf einem Messverfahren mit Berechnungsanteil bei kleinen Volumenströmen deutlich verschlechtert.

Der Erfindung liegt die Aufgabe zugrunde, eine Lösung für eine Volumenstrommessung an einem bestehenden Ventilator zu integrieren, die auch bei kleinen Volumenströmen eine möglichst geringe fehler- oder toleranzbehaftete Abweichung aufweist.

Diese Aufgabe wird durch die Merkmalskombination gemäß Patentanspruch 1 und 10 gelöst.

Erfindungsgemäß wird eine Ansaugdüse für einen Ventilator mit einer Ansaugöffnung zur Ansaugung einer Ventilatorhauptströmung vorgeschlagen. Die Ansaugdüse weist einen sich an die Ansaugöffnung anschließenden Öffnungsrandabschnitt mit mindestens einem lokalen Ausbruch auf, in den ein Strömungseinsatz lösbar befestigbar ist. Der Strömungseinsatz bildet dabei einen in die Ansaugöffnung mündenden Bypass für eine in die Ventilatorhauptströmung mündende Bypassströmung. Zur Volumenstrombestimmung der Ventilatorhauptströmung sind in dem Bypass entsprechende Messmittel bzw. Sensoren zur Volumenstrommessung angeordnet.

Für die Durchflussmessung wird vorzugsweise die Heißfilmanemometrie eingesetzt, für die eine Auswerteelektronik sowie zwei Sensoren in Form von Thermoelementen notwendig sind. Beispielsweise werden als Sensoren ein die Umgebungstemperatur messender PT100 und PT1000 Thermoelement eingesetzt, die so auf der Oberfläche einer Platine bzw. der Leiterplatte montiert werden, dass sie in der Bypassströmung liegen. Beispielsweise wird der PT100 auf der Platine, der PT1000 als PTC mit Anschlussklammern direkt auf der Leiterplatte des Sensors montiert, um die Widerstände in einer Strömungslinie der Bypassströmung zu positionieren und hierdurch die Messgenauigkeit zu erhöhen. Über die Rasthaken ist eine positionsfeste Befestigung des Messmittels im Bypass ermöglicht.

Der Strömungseinsatz weist in einer vorteilhaften Ausführung eine Form bzw. Außenkontur auf, die einer Form des sich an den Ausbruch angrenzenden Öffnungsrandabschnitts entspricht, so dass der Öffnungsrandabschnitt mit daran befestigtem Strömungseinsatz kontinuierlich ausgebildet ist. Dies bedeutet, dass der Öffnungsrandabschnitt mit in dem Ausbruch befestigen Strömungseinsatz unterbrechungsfrei ausgebildet ist, als wäre kein Ausbruch vorgesehen. Der Strömungseinsatz füllt den Ausbruch im eingesetzten Zustand vollständig aus.

In einer Weiterbildung weist der Strömungseinsatz im Bypass einen Konfusor auf, über den die Bypassströmung beschleunigt und gebündelt wird. Die Messmittel werden im engsten Strömungsquerschnitt des Konfusors nach einer Einlaufstrecke des Konfusors angeordnet, die einem 3 - 5-fachen der Breite des durch den Konfusor gebildeten Düsenkanals entspricht. Hiermit kann eine optimale Anströmung der Messmittel bzw. Sensoren realisiert werden. Zusätzlich wird durch den Konfusor eine Zunahme der Gesamtgeschwindigkeit der Bypassströmung erreicht. Dieser Vorteil ist vor allem in Betriebsbereichen des Ventilators relevant, in denen lediglich geringe Drehzahlen gefordert sind oder sich der Ventilator im Hochlauf befindet. Die Zunahme der Strömungsgeschwindigkeit in dem Konfusor sorgt somit ebenfalls in Bereichen mit niedriger Strömungsgeschwindigkeit für eine erhöhte Anströmgeschwindigkeit der Messmittel bzw. Sensoren. Ein aussagekräftiges Messergebnis ist somit über alle Betriebspunkte des Ventilators gewährleistet.

In einem Ausführungsbeispiel ist der Konfusor einteilig an dem Strömungseinsatz ausgebildet. Diese Lösung wird beispielsweise dadurch erreicht, dass der Konfusor durch zueinander weisende Stege gebildet ist, die im Bypass einen Düsenkanal bilden. Die Form und Erstreckung der Stege ist leicht anpassbar, um zur Geometrie des Strömungseinsatzes zu passen und die gewünschte Düsenform des Konfusors zu gewährleisten.

Für eine positionsfeste Befestigung der Messmittel im Düsenkanal weist der Strömungseinsatz in einer günstigen Ausführung Rastelemente, beispielsweise Rasthaken zum Einclipsen des Strömungselements am Öffnungsrandabschnitt der Ansaugdüse auf.

Zur Bildung des Bypasses ist in einer vorteilhaften Ausführung der Ansaugdüse vorgesehen, dass der Strömungseinsatz eine an einem radialen Außenrand des Strömungseinsatzes verlaufende axiale Einlassöffnung und eine an einem radialen Innenrand des Strömungseinsatzes verlaufende axiale Auslassöffnung aufweist, so dass die Bypassströmung axial angesaugt und axial in die Ventilatorhauptströmung zurückgeführt wird. Die Einlassöffnung liegt radial am Außenrand des Strömungseinsatzes, die Auslassöffnung an seinem radialen Innenrand, der über die Länge des Ausbruchs einen Teil der Ansaugöffnung bildet.

In diesem sich an die Ansaugöffnung angrenzenden bzw. diese bildenden Abschnitt weist der Strömungseinsatz einen sich in axialer Richtung erstreckenden Einlaufabschnitt auf, an den sich die axiale Auslassöffnung anschließt. In anderen Worten bildet der Einlaufabschnitt eine Kontur, die eine axiale Zuführung der Bypassströmung in die Ventilatorhauptströmung ermöglicht. Der Bypass selbst verläuft entlang des Öffnungsrandabschnitts und insbesondere im Wesentlichen senkrecht oder senkrecht zu Axialrichtung der Ventilatorhauptströmung. Bei einer runden Ansaugöffnung entspricht der senkrechte Verlauf der Radialrichtung.

Eine positive geometrische Ausbildung zeigt sich bei der Ansaugdüse, wenn sich der Ausbruch und der Strömungseinsatz in Axialrichtung über 10 - 30% einer Gesamtlänge des Randes der Ansaugöffnung erstrecken. Üblicherweise ist die Ansaugöffnung der Ansaugdüse eines Ventilators rund, so dass sich der Ausbruch und der Strömungseinsatz vorzugsweise über 10 - 30% der Umfangslänge der Ansaugöffnung erstrecken.

Beispielsweise ist die Ausblaseinheit des Ventilators ein, die zur Aufnahme des Ventilatorrades ausgebildet ist. Die Ausblaseinheit umfasst ein sich im bestimmungsgemäßen Gebrauch an das Ventilatorrad in Strömungsrichtung unmittelbar anschließendes und von einer Ventilatorhauptströmung anströmbares Gehäuseteil, das einen Gehäusebypass für eine Bypassströmung der Ventilatorhauptströmung bildet. In dem Gehäusebypass sind Messmittel bzw. ein Sensor zur Volumenstrombestimmung der Ventilatorhauptströmung angeordnet. Die eingesetzten Messmittel bzw. Sensoren entsprechen denjenigen, die vorstehend beschrieben sind.

Die ausblasseitige Volumenstrommessung wird zum Beispiel weiter verbessert, in dem der Gehäusebypass einen Gehäusekonfusor aufweist und die Messmittel zur Volumenstrommessung der Ventilatorhauptströmung in einem engsten Strömungsquerschnitt des Gehäusekonfusors angeordnet sind. Durch den Konfusor wird die Bypassströmung beschleunigt und gebündelt.

Der Gehäusekonfusor wird zum Beispiel durch zueinander weisende Stege erzeugt, die im Gehäusebypass einen Gehäusedüsenkanal bilden. Ein durch die Stege gebildeter einströmseitiger Öffnungswinkel des Gehäusekonfusors ist zum Beispiel in einem Bereich von 90 - 110°.

Ferner ist es vorteilhaft, wenn innerhalb des Gehäusebypasses stromaufwärts zu dem Messmittel zur Volumenstrombestimmung ein Strömungsgleichrichter für die Bypassströmung angeordnet ist. Der Strömungsgleichrichter sorgt für eine Konditionierung sowie Laminarisierung der Strömung, so dass die aufgrund des Konfusors und dem turbulenten Ausblasfeld entstehenden Verwirbelungen, Dralleffekte und Profilverschiebungen eliminiert werden. Hierdurch ist eine messbare Verbesserung der Genauigkeit der Durchflussstrommessung am Ventilator zu erzielen.

Bezüglich der Anordnung des Strömungsgleichrichters ist zum Beispiel vorgesehen, dass ein Abstand E in Strömungsrichtung zwischen dem Strömungsgeichrichter und dem Messmittel im Verhältnis gegenüber einer Bypassbreite D im Bereich des Messmittels derart festgelegt ist, dass gilt 0,5*D ≤ E ≤ 1,5*D.

In einem Beispiel ist der Strömungsgleichrichter ein Wabengleichrichter. Dieser muss zwar in Strömungsrichtung länger dimensioniert werden, liefert jedoch auch bessere Gleichrichteffekte.

Bei der Ausblaseinheit wird in einem Beispiel ferner vorgesehen, dass eine Auslaufstrecke F zwischen dem Messmittel und einer äußersten Austrittsstelle der Bypassströmung im Verhältnis gegenüber einer Bypassbreite D derart im Bereich des Messmittels festgelegt ist, dass gilt 1,5*D ≤ F ≤ 2*D. Die gerade Einlaufstrecke B der Bypassströmung innerhalb des Gehäuseteils bis zu dem Strömungsgleichrichter ist vorteilhafterweise im Verhältnis gegenüber einer Bypassbreite D im Bereich des Messmittels derart festgelegt, dass gilt 3*D ≤ B ≤ 5*D.

Zur Reduzierung der Bauteile ist die Ausblaseinheit günstigerweise dadurch gekennzeichnet, dass das Gehäuseteil als Kabelaufnahme für ein Anschlusskabel des Ventilators ausgebildet und der Gehäusebypass in die Kabelaufnahme integriert ist. Die Kabelaufnahme, die in der Technik auch als Kabelschutzstrebe mit integrierbarem Kondensatorhalter ausgebildet werden kann, ist üblicherweise an der für das Gehäuseteil vorgesehenen Position nahe am Ausblasabschnitt des Ventilatorrades positioniert und eignet sich mithin als den Bypass ausbildendes Gehäuseteil.

Die Erfindung umfasst ferner den gesamten Ventilator mit einer vorstehend beschriebenen Ansaugdüse, einer Ausblaseinheit sowie einem zwischen der Ansaugdüse und der Ausblaseinheit angeordneten Ventilatorrad. Die Ansaugdüse und die Ausblaseinheit sind über Befestigungsschenkel verbunden und umgreifen das Ventilatorrad, das im Betrieb die Ventilatorhauptströmung sowie die Bypassströmung durch den Bypass der Ansaugdüse erzeugt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Gesamtansicht eines Ventilators,
- Fig. 2: eine perspektivische Ansicht einer Ansaugdüse;
- Fig. 3a: eine perspektivische Ansicht auf eine Oberseite eines Strömungseinsatzes;
- Fig. 3b: eine perspektivische Ansicht auf eine Unterseite des Strömungseinsatzes aus Fig. 3a;
- Fig. 4: eine partielle Schnittansicht der Ansaugdüse aus Fig. 2;
- Fig. 5: eine perspektivische Ansicht eines Gehäuseteils aus Fig. 1;
- Fig. 6a: eine Seitenansicht des Ventilators aus Fig. 1;
- Fig. 6b: eine Schnittansicht A-A aus Fig. 6a;
- Fig. 7: eine Detailansicht A aus Fig. 6b., die nicht Teil der Erfindung ist

In den Figuren bezeichnen gleiche Bezugszeichen stets gleiche Teile.

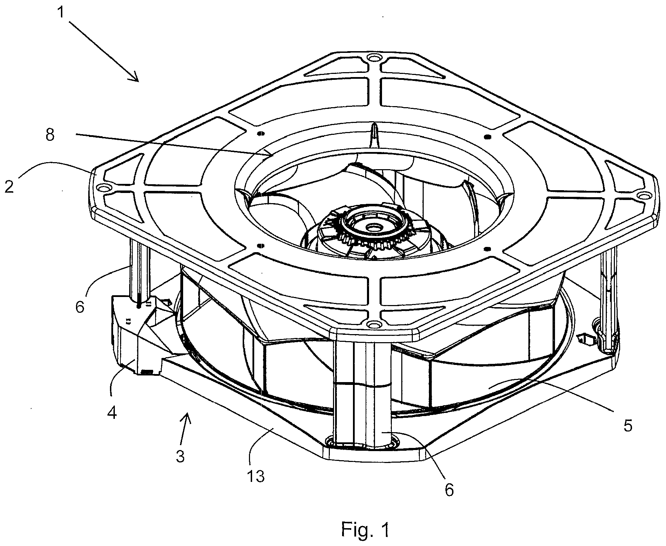

In Figur 1 ist der Ventilator 1 in einer perspektivischen Ansicht mit einer Ansaugdüse 2, einer Ausblaseinheit 3 sowie einem dazwischen motorisch angetriebenen Ventilatorrad 5 gezeigt. Die Ansaugdüse 2 ist plattenförmig und weist zentral eine runde radial und axial eingezogene Ansaugöffnung 8 auf. Die Ausblaseinheit 3 ist gebildet aus einer das Ventilatorrad 5 aufnehmenden Bodenplatte 13 mit einem daran befestigten und als Kabelaufnahme ausgebildeten Gehäuseteil 4. Die Ansaugdüse 2 und die Ausblaseinheit 3 sind über vier in den Ecken vorgesehene Schenkel 6 verbunden, so dass der Ventilator 1 eine Baueinheit darstellt. Die Schenkel 6 sind teils an der Ansaugdüse 2 teils an der Bodenplatte bzw. dem Gehäuseteil 4 ausgebildet und verrasten ineinander.

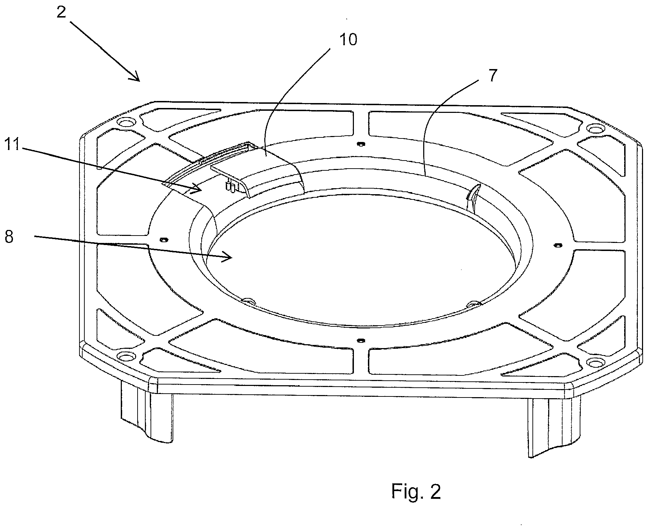

In Figur 2 ist die Ansaugdüse 2 einzeln und detaillierter dargestellt. Insbesondere ist in Figur 2 der in dem sich an die Ansaugöffnung 8 anschließenden bzw. diese bestimmende Öffnungsrandabschnitt 7 mit einem lokalen Ausbruch 11 gezeigt. Im Bereich des Ausbruchs 11 läuft der Körper der Ansaugdüse 2 bis zur Ansaugöffnung 8, jedoch wird ein Freiraum für den Strömungseinsatz 10 bereitgestellt, der im eingesetzten Zustand den Ausbruch 11 vollständig ausfüllt, so dass der Öffnungsrandabschnitt 7 kontinuierlich in Umfangsrichtung und radialer Richtung verläuft. Der Strömungseinsatz 10 weist hierfür eine Form auf, die der Form des sich an den Ausbruch 11 angrenzenden Öffnungsrandabschnitts 7 entspricht. Der Spalt am Rand des Strömungseinsatzes 10 ist strömungstechnisch vernachlässigbar gering. Zur lösbaren Befestigung des Strömungseinsatzes 10 im Ausbruch 11 sind geeignete Einclips- oder Verrastelemente vorgesehen.

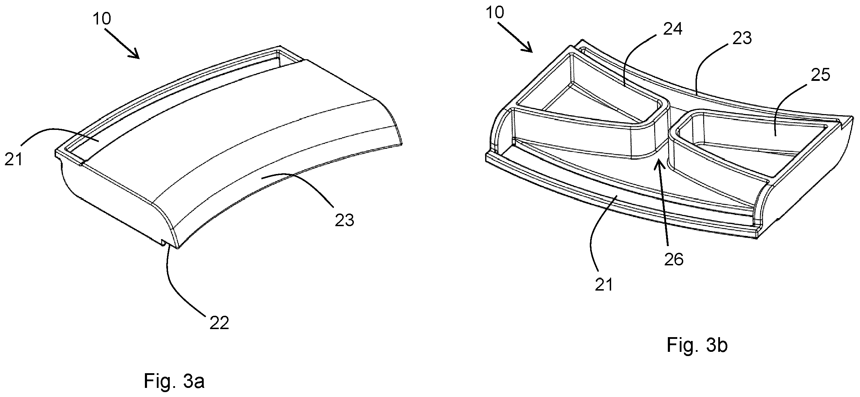

Bezugnehmend auf die Fig. 3a, 3b ist der Strömungseinsatz 10 von beiden Seiten detaillierter dargestellt. Der Strömungseinsatz 10 weist eine an seinem radialen Außenrand verlaufende axiale Einlassöffnung 21 sowie eine am radialen Innenrand verlaufende axiale Auslassöffnung 22 auf und bildet dazwischen den Bypass für die Bypassströmung. Die Bypassströmung wird axial angesaugt, verläuft radial durch den Strömungseinsatz 10 und wird über die im Wesentlichen axial ausgerichtete Auslassöffnung 22 in die Ventilatorhauptströmung an der Ansaugöffnung 8 zurückgeführt. An dem Strömungseinsatz 10 sind im Bypass zueinander weisende Stege 24, 25 ausgebildet, die einen Konfusor mit einem Düsenkanal 26 erzeugen, durch den die Bypassströmung gedrängt wird. Die Stege 24, 25 bilden eine geschlossene Kontur und führen somit die Bypassströmung ausschließlich durch den Düsenkanal 26.

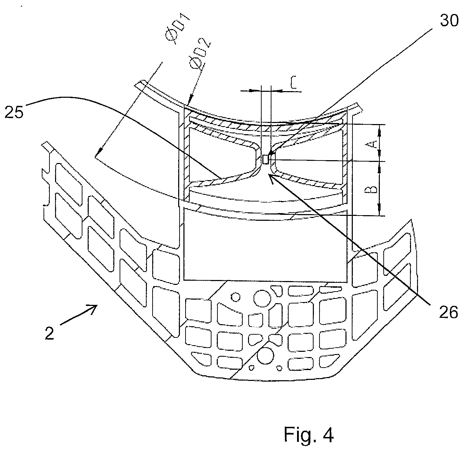

Wie in der partiellen Schnittansicht der Ansaugdüse 2 im Bereich des Strömungseinsatzes 10 gemäß Figur 4 gut zu erkennen, verläuft der durch die Stege 24, 25 gebildete Düsenkanal 26 geradlinig nach radial außen. Nach einer an der Einlassöffnung 21 beginnenden Einlaufstrecke B ist das Messmittel 30 angeordnet, wobei die Einlaufstrecke B dreimal so lang ist wie die Düsenkanalbreite C. Die sich von dem Messmittel 30 bis zur Ansaugöffnung erstreckende Auslaufstrecke ist doppelt so groß wie die Düsenbreite C. Der Düsenkanal weist im Bereich des Messmittels 30 eine konstante Düsenkanalbreite B auf. Mit D2 ist der Durchmesser der Ansaugöffnung 8 und mit D1 der Durchmesser an der Einlassöffnung 21 gekennzeichnet.

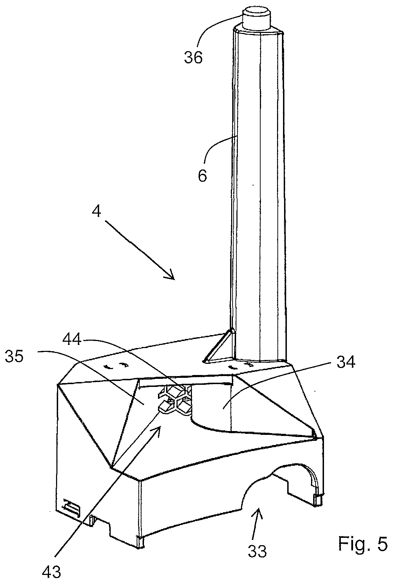

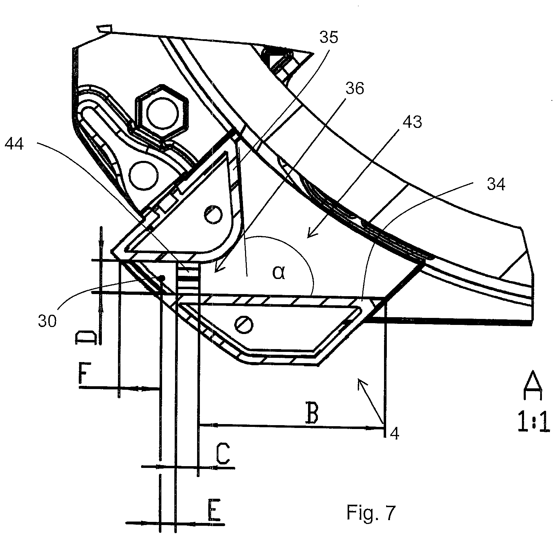

In Figur 5 zeigt das Gehäuseteil 4 aus Figur 1 ausgebildet als Kabelaufnahme des Ventilators 1. Das Gehäuseteil 4 bildet den Gehäusebypass für die Bypassströmung der Ventilatorhauptströmung in der Ausblaseinheit 3, wobei in dem Gehäusebypass die Messmittel zur Volumenstrombestimmung der Ventilatorhauptströmung angeordnet sind, wie in Fig. 7 detaillierter gezeigt. An dem Gehäuseteil 4 ist einteilig der Schenkel 6 mit einem Anschlusskopf 36 ausgebildet, über den der Schenkel 6 mit der Ansaugdüse 2 verbunden wird. Das Gehäuseteil 4 weist im unteren Abschnitt eine Aussparung 33 zur Einführung des Ventilatoranschlusskabels (nicht gezeigt) auf. Zudem können weitere nicht dargestellte Bauteile wie eine Kondensatorhalterung in das Gehäuseteil 4 integriert werden. Im oberen Abschnitt ist in dem Gehäuseteil 4 eine dem Ventilatorrad 5 zuweisende Einblasöffnung 43 vorgesehen, die den Eintritt bzw. Anfang des durch die Stege 34 und 35 gebildeten Gehäusebypasses bereitstellt. In die Einblasöffnung ist ein Wabengleichrichter 44 zur Konditionierung und Laminarisierung der eingeblasenen Luftströmung stromaufwärts gegenüber dem Messmittel zur Volumenstrommessung integriert.

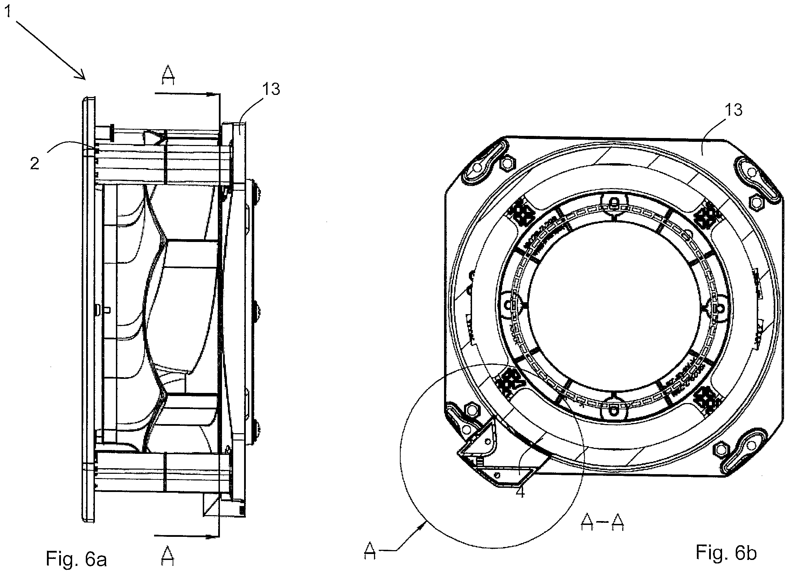

Bezugnehmend auf die Figuren 6a, 6b und 7 ist das Gehäuseteil 4 und der darin gebildete Gehäusebypass detaillierter dargestellt. In Fig. 7, einer Detailansicht A der Schnittansicht A-A aus Fig. 6b, ist die geschlossene Form der Stege 34, 35 gut zu erkennen, die den Düsenkanal 36 erzeugt. Der direkt von dem Ventilatorrad 5 angeblasene Steg 35 verläuft im Wesentlichen senkrecht zur Ausblasrichtung, der Steg 35 bildet an der Einblasöffnung 43 eine Rundung als Übergang in den Düsenkanal 36 des Gehäusebypasses. Beide Stege 34, 35 leiten die Strömung in den Düsenkanal 36 hinein und bilden den Gehäusekonfusor, in dem sowohl der Wabengleichrichter 44 als auch die Messmittel 30 zur Volumenstrommessung angeordnet sind. Der Wabengleichrichter 44 überdeckt flächig den gesamten Düsenkanal 36. Der durch die Stege 34, 35 gebildete einströmseitige Öffnungswinkel α des Gehäusekonfusors ist in der gezeigten Ausführung 95°.

Die Messmittel 30 sind von dem Wabengleichrichter 44 in einem Abstand E angeordnet, der der Hälfte der Bypassbreite D entspricht. Die Einlaufstrecke B ist durch die Länge des Stegs 34 bis zum Wabengleichrichter 44 bestimmt und entspricht im gezeigten Ausführungsbeispiel der vierfachen Bypassbreite D. Die Auslaufstrecke F ist zwischen dem Messmittel 30 und der äußersten Austrittsstelle der Bypassströmung am Rande des Stegs 35 bestimmt und entspricht im gezeigten Ausführungsbeispiel dem 1,5-fachen der Bypassbreite D. Die Breite C des Wabengleichrichters 44 liegt vorzugsweise in einem Bereich von 0,7-1,0 der Bypassbreite D und ist in der gezeigten Ausführung 0,8*D. Die Bypassbreite D entspricht der Breite des durch sich abschnittsweise parallel erstreckende Stege 34, 35 geradlinig mit konstanter Breite verlaufenden Düsenkanals 36.

## Patentansprüche

1. Ansaugdüse (2) für einen Ventilator (1) mit einer Ansaugöffnung (8) zur Ansaugung einer Ventilatorhauptströmung, **dadurch gekennzeichnet, dass** die Ansaugdüse (2) einen sich an die Ansaugöffnung (8) anschließenden Öffnungsrandabschnitt (7) mit mindestens einem lokalen Ausbruch (11) aufweist, wobei in den Ausbruch (11) des Öffnungsrandabschnitts (7) ein Strömungseinsatz (10) lösbar befestigbar ist, der einen in die Ansaugöffnung (8) mündenden Bypass für eine in die Ventilatorhauptströmung mündende Bypassströmung bildet, und wobei im Bypass Messmittel (30) zur Volumenstrombestimmung der Ventilatorhauptströmung angeordnet sind.

2. Ansaugdüse nach Anspruch 1, **dadurch gekennzeichnet, dass** der Strömungseinsatz (10) eine Form aufweist, welche einer Form des sich an den Ausbruch (11) angrenzenden Öffnungsrandabschnitts (7) entspricht, so dass der Öffnungsrandabschnitt (7) mit befestigtem Strömungseinsatz (10) kontinuierlich ausgebildet ist.

3. Ansaugdüse nach Anspruch 1 oder 2, **dadurch gekennzeichnet, dass** der Strömungseinsatz (10) im Bypass einen Konfusor aufweist und die Messmittel (30) in einem engsten Strömungsquerschnitt des Konfusors angeordnet sind.

4. Ansaugdüse nach dem vorigen Anspruch, **dadurch gekennzeichnet, dass** der Konfusor einteilig an dem Strömungseinsatz (10) ausgebildet ist.

5. Ansaugdüse nach den vorigen beiden Ansprüchen, **dadurch gekennzeichnet, dass** der Konfusor durch zueinander weisende Stege (24, 25) gebildet ist, die im Bypass einen Düsenkanal (26) bilden.

6. Ansaugdüse nach dem vorigen Anspruch, **dadurch gekennzeichnet, dass** der Strömungseinsatz (10) Rastelemente zur positionsfesten Befestigung der Messmittel (30) im Düsenkanal (26) aufweist.

7. Ansaugdüse nach einem der vorigen Ansprüche, **dadurch gekennzeichnet, dass** der Strömungseinsatz (10) zur Bildung des Bypasses eine an einem radialen Außenrand des Strömungseinsatzes (10) verlaufende axiale Einlassöffnung (21) und eine an einem radialen Innenrand des Strömungseinsatzes (10) verlaufende axiale Auslassöffnung (22) aufweist, so dass die Bypassströmung axial angesaugt und axial in die Ventilatorhauptströmung zurückführbar ist.

8. Ansaugdüse nach dem vorigen Anspruch, **dadurch gekennzeichnet, dass** der Strömungseinsatz (10) in einem an die Ansaugöffnung (8) angrenzenden Abschnitt einen sich in axialer Richtung erstreckenden Einlaufabschnitt (23) aufweist, an den sich die axiale Auslassöffnung (22) anschließt.

9. Ansaugdüse nach einem der vorigen Ansprüche, **dadurch gekennzeichnet, dass** sich der Ausbruch (11) und der Strömungseinsatz (10) in Axialrichtung über 10 - 30% einer Gesamtlänge der Ansaugöffnung (8) erstrecken.

10. Ventilator (1) umfassend eine Ansaugdüse (2) nach einem der vorigen Ansprüche 1 bis 9 und eine Ausblaseinheit sowie ein zwischen der Ansaugdüse (2) und der Ausblaseinheit angeordnetes Ventilatorrad (5), wobei die Ansaugdüse (2) und die Ausblaseinheit über Befestigungsschenkel verbunden sind, und wobei über das Ventilatorrad (5) im Betrieb eine Ventilatorhauptströmung sowie eine Bypassströmung durch den Bypass der Ansaugdüse (2) erzeugbar ist.

## Claims

1. A suction nozzle (2) for a fan (1) with a suction opening (8) for suctioning a valve main flow, **characterized in that** the suction nozzle (2) comprises an opening edge section (7) which adjoins the suction opening (8) and has at least one local outbreak (11), wherein, in the outbreak (11) of the opening edge section (7), a flow insert (10) can be fastened detachably, which forms a bypass leading to the suction opening (8) for a bypass flow leading to the fan main flow, and wherein, in the bypass, measuring means (30) for the volume flow determination of the valve main flow are arranged.

2. The suction nozzle according to Claim 1, **characterized in that** the flow insert (10) has a shape which corresponds to a shape of the opening edge section (7) adjoining the outbreak (11), so that the opening edge section (7) is configured continuously with fastened flow insert (10).

3. The suction nozzle according to Claim 1 or 2, **characterized in that** the flow insert (10) comprises a confusor in the bypass, and the measuring means (30) are arranged in a narrowest flow cross section of the confusor.

4. The suction nozzle according to the preceding claim, **characterized in that** the confusor is configured so as to form a single piece on the flow insert (10).

5. The suction nozzle according to the two preceding claims, **characterized in that** the confusor is formed by webs (24, 25) facing one another and forming a nozzle channel (26) in the bypass.

6. The suction nozzle according to the preceding claim, **characterized in that** the flow insert (10) comprises latching elements for the positionally fixed fastening of the measuring means (30) in the nozzle channel (26).

7. The suction nozzle according to any one of the preceding claims, **characterized in that**, for the formation of the bypass, the flow insert (10) comprises an axial inlet opening (21) extending on a radial outer edge of the flow insert (10), and an axial outlet opening (22) extending on a radial inner edge of the flow insert (10), so that the bypass flow is axially suctioned and can be returned axially into the valve main flow.

8. The suction nozzle according to the preceding claim, **characterized in that**, in a section adjoining the suction opening (8), the flow insert (10) comprises an intake section (23) extending in axial direction, which the axial outlet opening (22) adjoins.

9. The suction nozzle according to any one of the preceding claims, **characterized in that** the outbreak (11) and the flow insert (10) extend in axial direction over 10-30% of a total length of the suction opening (8).

10. A fan (1) comprising a suction nozzle (2) according to any one of the preceding Claims 1 to 9 and a blow-out unit as well as, arranged between the suction nozzle (2) and the blow-out unit, an impeller (5), wherein the suction nozzle (2) and the blow-out unit are connected via fastening legs, and wherein, via the impeller (5), during operation, a fan main flow as well as a bypass flow through the bypass of the suction nozzle (2) can be produced.

## Revendications

1. Buse d'aspiration (2) pour un ventilateur (1), dotée d'une ouverture d'aspiration (8) servant à aspirer un flux principal de ventilateur,
**caractérisée en ce que** la buse d'aspiration (2) présente une partie de bord d'ouverture (7) adjacente à l'ouverture d'aspiration (8) et dotée d'au moins un creux local (11), un insert d'écoulement (10) pouvant être fixé de manière amovible dans le creux (11) de la partie de bord d'ouverture (7) et formant une dérivation, débouchant sur l'ouverture d'aspiration (8), pour un flux de dérivation débouchant sur le flux principal de ventilateur, et des moyens de mesure (30) servant à déterminer le débit volumique du flux principal de ventilateur étant disposés dans la dérivation.

2. Buse d'aspiration selon la revendication 1, **caractérisée en ce que** l'insert d'écoulement (10) présente une forme qui correspond à une forme de la partie de bord d'ouverture (7) adjacente au creux (11) de sorte que la partie de bord d'ouverture (7) est réalisée en prolongement de l'insert d'écoulement (10) fixé.

3. Buse d'aspiration selon la revendication 1 ou 2, **caractérisée en ce que** l'insert d'écoulement (10) présente un confuseur dans la dérivation, et les moyens de mesure (30) sont disposés dans une section transversale d'écoulement la plus étroite du confuseur.

4. Buse d'aspiration selon la revendication précédente, **caractérisée en ce que** le confuseur est réalisé d'un seul tenant sur l'insert d'écoulement (10).

5. Buse d'aspiration selon les deux revendications précédentes, **caractérisée en ce que** le confuseur est formé par des entretoises (24, 25) tournées les unes vers les autres qui forment un canal de buse (26) dans la dérivation.

6. Buse d'aspiration selon la revendication précédente, **caractérisée en ce que** l'insert d'écoulement (10) présente des éléments d'arrêt pour la fixation solidaire en position des moyens de mesure (30) dans le canal de buse (26).

7. Buse d'aspiration selon l'une quelconque des revendications précédentes, **caractérisée en ce que** l'insert d'écoulement (10) présente pour la formation de la dérivation une ouverture d'admission axiale (21) s'étendant sur un bord extérieur radial de l'insert d'écoulement (10) et une ouverture de sortie axiale (22) s'étendant sur un bord intérieur radial de l'insert d'écoulement (10) de sorte que le flux de dérivation est aspiré axialement et peut être ramené axialement vers le flux principal de ventilateur.

8. Buse d'aspiration selon la revendication précédente, **caractérisée en ce que** l'insert d'écoulement (10) présente dans une partie adjacente à l'ouverture d'aspiration (8) une partie d'entrée (23) s'étendant dans la direction axiale et qui est suivie de l'ouverture de sortie axiale (22).

9. Buse d'aspiration selon l'une quelconque des revendications précédentes, **caractérisée en ce que** le creux (11) et l'insert d'écoulement (10) s'étendent dans la direction axiale sur 10 à 30 % d'une longueur totale de l'ouverture d'aspiration (8).

10. Ventilateur (1) comprenant une buse d'aspiration (2) selon l'une quelconque des revendications précédentes 1 à 9 et une unité de soufflage ainsi qu'une roue de ventilateur (5) disposée entre la buse d'aspiration (2) et l'unité de soufflage, la buse d'aspiration (2) et l'unité de soufflage étant reliées par des branches de fixation, et dans lequel la roue de ventilateur (5) permet de générer en cours de fonctionnement un flux principal de ventilateur ainsi qu'un flux de dérivation à travers la dérivation de la buse d'aspiration (2).
